Europäisches Patentamt

European Patent Office

Office européen des brevets

(11) Publication number: **0 325 895**
**A1**

## (12) EUROPEAN PATENT APPLICATION

(21) Application number: 88830028.2

(22) Date of filing: 26.01.88

(51) Int. Cl.4: **F16K 27/04 , F16K 3/12 , F16K 43/00**

(43) Date of publication of application:
02.08.89 Bulletin 89/31

(84) Designated Contracting States:
AT BE CH ES FR GR IT LI LU NL SE

(71) Applicant: **Hsiao, Shinn-I**
**No. 120-1 Shin-Rong Rd.**
**Chiayi City(TW)**

(72) Inventor: **Hsiao, Shinn-I**
**No. 120-1 Shin-Rong Rd.**
**Chiayi City(TW)**

(74) Representative: **Righetti, Giuseppe**
**Bugnion S.p.A. Via Carlo Farini, 81**
**I-20159 Milano(IT)**

(54) **Separable valve assembly.**

(57) A separable valve assembly comprises a valve mount 6 and a valve body 7, which can be readily put together in use and separated for replacement of either of the two. The valve mount 6 has a cavity with two inclined wall planes and an arcuate bottom surface in conformity with the shape of the valve body so that the valve body 7 can be tightly wedged therein and secured in place by a number of bolts 81 and nuts 8 with a sealing element 72 disposed between the contact surfaces for leakage-preventing purpose, and a valve body lifting bolt 61 is disposed at the bottom of the mount 6 for facilitating separation of the valve body 6 from the assembly.

FIG.4-A

EP 0 325 895 A1

## SEPARABLE VALVE ASSEMBLY

The present invention relates to a separable valve assembly comprising a valve mount and a valve body that are easily put together and quickly separated from each other for repair or replacement.

Valves have been widely employed in pipeline systems at power plants to conditionally control the flow of steam, gas and fluid or to regulate the fluid pressure in the pipes.

A variety of valves have been designed and available in industry, such as lift valves, butterfly valves, gate valves, rotary valves; and in a more functional term, the valves can be further categorised into stop valves, throttle valves, escape valves, emergency valves, distributing valves, check valves and reducing valves.

Valves are easily worn out and leak in operation, causing loss of material or danger to the operational safety. Therefore, the replacement of these valves is indispensable and carried out occasionally. However, the replacement of a valve involves a number of complicated steps in which welding, cutting and threading exercises must be performed.

There are two methods of connection of a valve to a pipeline: screw-thread and flange. The disadvantages of the two approaches in replacing a broken valve are listed as below:

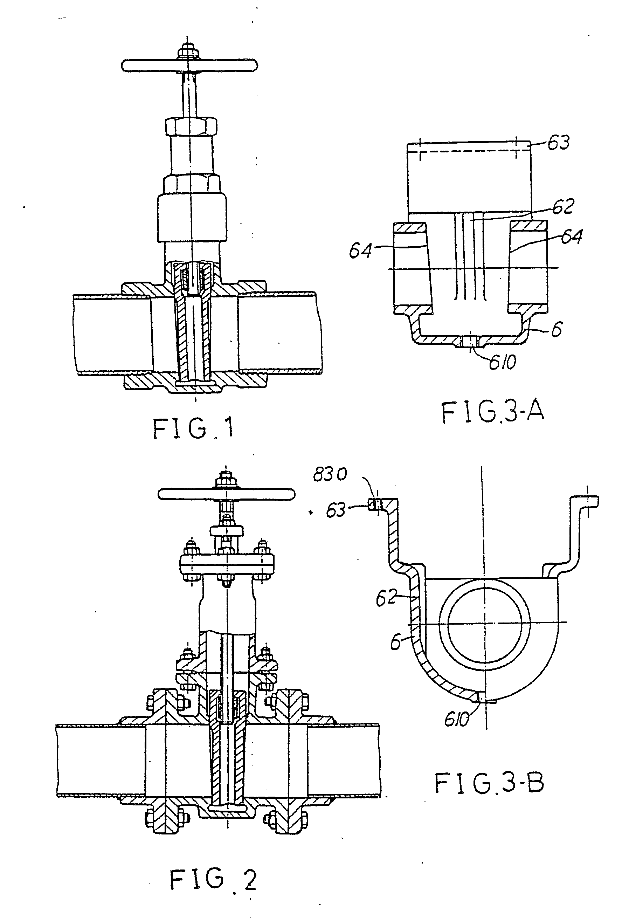

1. The screw-thread connecting method as shown in Figure 1 of the accompanying drawings is practiced by first putting screw-threads on external surface of the ends of two tubes. The valve is then joined to the ends of the tubes in assembly. But the worn out valve is hard to be detached from the tubes when all the tubes and valves are fixed in place. The only way to effect removal is by cutting them apart, and a new valve is recoupled to the tubes by using a connecting member; this kind of approach makes the replacement of a valve time, labour and material consuming.

2. The flange connecting method: as shown in Figure 2 of the accompanying drawings, the valve is bolted to a pair of flange members to which tubes are welded first. However, the valve is a tight fit when inserted between the two flange members in assembly, and the removal of the valve must be performed by bending the tubes, and the bent tubes are difficult to get straight after the replacement of the valve, causing inconvenience and imperfection in a valve replacement practice.

The invention provides a separable valve assembly comprising a valve mount and a valve body wherein the valve mount has a cavity having two inclined inner planes oppositely disposed therein, in registry with two correspondingly contoured external planes of the valve body such that the valve body can be tightly wedged into the cavity of the valve mount; a pair of fixing plates are removably mounted on the top of the valve mount, the centre of each plate being provided with a valve body pushing bolt which is used to push an inserted valve body into tight engagement with the valve mount during assembly; a valve body lifting bolt is placed at the bottom of the valve mount for abutment against the bottom of the valve body for pushing the valve body upward for separation of the two in disassembly.

An embodiment of the invention will now be described by way of example and with reference to the accompanying drawings, in which:

    Figure 1 is one type of conventional valve joint;

    Figure 2 is another type of conventional valve joint;

    Figure 3A is a longitudinal sectional view of a valve mount;

    Figure 3B is a cross-sectional view of the separated valve mount;

    Figure 4A is a longitudinal sectional view of a valve assembly;

    Figure 4B is a cross-sectional view of the valve assembly.

With reference to Figure 3A and Figure 3B, a valve mount 6 is formed with a recess and a tube-connecting port disposed at each side thereof; and external tubes are joined to the ports by welding. The inner surface 64 of the recess of the valve mount 6 is contoured to have two opposite inclined planes so that a valve body 7 having correspondingly shaped external planes can be tightly wedged into the recess or cavity. At the centre of the bottom of the cavity, there is disposed an inner threaded bolt hole 610 into which a valve body lifting bolt 61 is located. On the top rim of the wall of the cavity is disposed an outward horizontally extended flange 63 having a number of bores 830. On both of the other opposite inner walls of the cavity, there is a groove-like track 62.

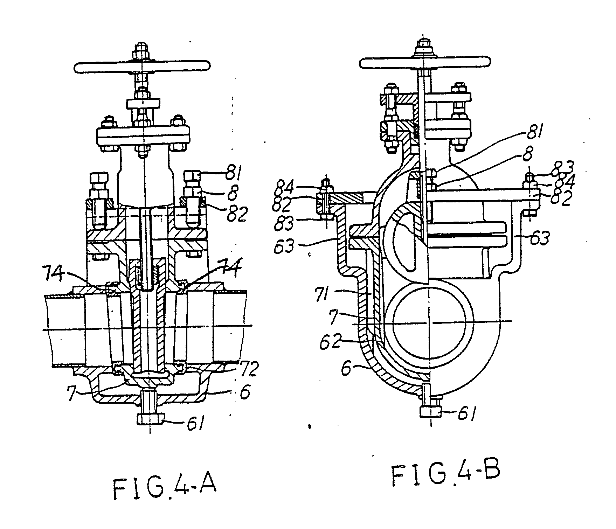

Referring now to Figure 4A and Figure 4B, on each side of the valve body 7, corresponding to the groove-like track 62, there is a vertical rib 71 in register with the track 62 in assembly. The other two sides 74 of the valve body 7 are shaped in conformity with the inclined planes 64 for facilitating wedging association with respect to the cavity of the valve mount 6 in assembly. A pair of circular recesses are disposed around the periphery of the ports of the valve body 7 for receiving circular sealing elements 72 for leakage preventing purpose.

On the flange 63 are mounted a pair of fixing plates 82, secured in place by sets of bolt 83 and nut 84. At the centre of each fixing plate 82 is disposed a threaded bore for location of a valve body pushing bolt 81, having a nut 8 attached therewith, for use in acting against the valve body 7 to move it downward to tightly fit the valve body 7 in the valve mount 6. At this stage the vertical rib 71 of the valve body 7 is in sliding registry with the groove-like track 62 of the valve mount 6. Thus surfaces 64 and 74 of the valve mount 6 and valve body 7 respectively are tightly fitted with respect to each other.

To separate the valve body 7 from the valve mount 6, nuts 84 are first loosened so that the fixing plates 82 are able to be removed, then the valve body lifting bolt 61 is actuated to push upward the valve body 7.

The present example is based on a gate valve structure; however, other types of valve, such as lift valve, butterfly valve, rotary valve are all suitable for the present invention as long as the inlet and outlet ports of the valve are disposed rectilinearly.

The present valve structure is characterised in its ready, quick attachment to and detachment from a pipeline system by adoption of a combination of separable valve mount and valve body, thus replacement of a broken valve on a pipeline is greatly simplified.

## Claims

1. The separable valve assembly comprising a valve mount (6) and a valve body (7) wherein the valve mount (6) has a cavity having two inclined inner planes (64) oppositely disposed therein, in registry with two correspondingly contoured external planes (74) of the valve body (7) such that the valve body can be tightly wedged into the cavity of the valve mount; a pair of fixing plates (82) are removably mounted on the top of the valve mount, the centre of each plate (82) being provided with a valve body pushing bolt (81) which is used to push an inserted valve body (7) into tight engagement with the valve mount (6) during assembly; a valve body lifting bolt is placed at the bottom of the valve mount (6) for abutment against the bottom of the valve body (7) for pushing the valve body upward for separation of the two in disassembly.

2. A separable valve assembly substantially as herein described with reference to and as shown in Figures 3 and 4 of the accompanying drawings.

FIG.1

FIG.3-A

FIG.2

FIG.3-B

FIG.4-A

FIG.4-B

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CH-A- 178 851 (L. VON ROLL'SCHEN EISENWERKE) <br> * Whole document * <br> --- | 1 | F 16 K 27/04 <br> F 16 K 3/12 <br> F 16 K 43/00 |
| A | US-A-3 658 087 (ACF INDUSTRIES) <br> * Abstract * <br> --- | 1 | |
| A | GB-A- 286 273 (O.D. REDDING) <br> --- | | |
| A | GB-A- 762 430 (CAMERON IRON WORKS) <br> --- | | |
| A | US-A-2 705 019 (A.S. VOLPIN) <br> --- | | |
| A | US-A-3 194 259 (TRIANGLE VALVE CO.) <br> --- | | |
| A | US-A-3 656 501 (FMC CORP.) <br> --- | | |
| A | FR-A-2 142 338 (VETCO OFFSHORE INDUSTRIES INC.) <br> ----- | | |

**TECHNICAL FIELDS SEARCHED (Int. Cl.4)**

F 16 K 27/00
F 16 K 3/00
F 16 K 43/00

The present search report has been drawn up for all claims

| Place of search | Date of completion of the search | Examiner |
|---|---|---|
| THE HAGUE | 30-09-1988 | DE SMET F.P. |